# EUROPEAN PATENT APPLICATION

(11) **EP 2 819 047 A1**
(43) Date of publication of application: **31.12.2014**
(21) Application number: 13305912.1
(22) Date of filing: 28.06.2013
(51) Int. Cl.: G06F 21/10

(54) **Method and system to share content**

(71) Applicant: France Telecom, 75015 Paris (FR)
(72) Inventor: Zemek, Radim, Tokyo, 1890013 (JP)

(57) **Abstract**

The present invention relates to a method for sharing content between a first and second user equipment, the content being available to the second user equipment through a pairing with the first user equipment having access to the content, the method comprising for the second user equipment:
- accessing the content through the first user equipment for rendering on the second user equipment, the accessing comprising receiving from the first user equipment a link element to a source the content may be accessed from,
- rendering the content of the second user equipment as long as the first user equipment is detected to be in proximity with the second user equipment,
- upon detecting a loss of the proximity of the first user, using the link element to further access the content directly from the source.

## Description

### FIELD OF THE PRESENT SYSTEM:

The present invention generally relates to electronic devices, and more specifically to the sharing of protected content among such devices.

### BACKGROUND OF THE PRESENT SYSTEM:

Mobile handsets have an inherently impoverished graphical user interface (GUI) with respect to desktop computers. Small screens and tiny keyboards are typical of mobile handsets that fit in your pocket. Recent so called smart phones have introduced the use of a touch screen in an attempt to simplify the user experience with his mobile handset. For instance, the touch interface of the iPhone® has revolutionized the mobile handset industry and brought whole new mobile user experiences.

In existing smart phones, application programs (AP) may be controlled using touch inputs. Different touch inputs may control the AP in different ways. For instance, a user touching an AP icon will cause a control of the desktop GUI that will launch the AP corresponding to the touched icon. The desktop GUI of the iPhone™ comprising a plurality of AP icons may be seen as an AP itself. A sliding motion across the desktop GUI, or a drag touch input, will cause another control of the desktop GUI, like displaying another set of AP icons hidden so far. The user gets a feeling that he is browsing through pages of AP icons to select an interesting application program.

The new smartphones or even pads, like the Apple™ or Samsung™ tablets, are now capable of functions far beyond simple phone services. They can include media playing and recording, web browsing, games ...

Among media applications, it is possible now to playing media like videos or music with these devices. The media content can be local or streamed over a data connection from a media server.

Smart phones are just one of many devices available today to a user. Other devices like music players, TVs, computers, pads ... can also play media content. Indeed, the emergence of connected devices has extended the realm of the possible when it comes for the user to interact with and share a media content. This creates the opportunity for a variety of players (manufacturers, pay-TV operators, Internet companies, telecom operators ... ) to offer multi-screens solutions between devices.

Sharing solutions are now readily available to distribute the media content among the different user devices. A user for instance can send a picture from one smartphone to another target smartphone provided they both host the same sharing application. To do so the devices are paired and the user has the feeling that he is actually displacing the picture from one device to the other by simply sliding the picture with his finger in the direction of the receiving device.

Other solutions are available for videos played for instance on a tablet. Apple Airplay® is a solution proposed for local media content. Google Fling® offers a similar user's experience. Another solution is proposed by Snapstick™. It consists in browsing a catalog of different videos, and upon selection of one of them (an activation of a transfer), you can shake your device and the selected video is streamed directly to another predefined device.

Such sharing is based on the assumption that the different devices involved in the sharing have valid access rights to the content. A problem arrises when a first user, accessing content on a first electronic device through a premium subscription for instance, shares the content with the device of a second user, that does not have such access rights. Such sharing may be allowed if the premium subscription allows a multiscreen/multi-user content access. This feature is enabled through DRM (Digital Rights Management) technology that binds protected content e.g. to a single device or set of devices belonging for instance to one user. Such arrangement prohibits users to distribute protected content freely among each other.

Users often enjoy protected content in a group at home setting, e.g. watching video on demand; however, it is not easily possible for sharing a content among users (group) in a "on the go" setting, e.g. due to the small screen size of portable devices or DRM issues. Therefore in order to enjoy protected content in this mode, it is necessary to allow users to share content to multiple devices that belong to different users.

Nevertheless, even if such sharing is allowed, when a first user, the owner of the content, no longer shares it with others, its access becomes problematic for a second user.

There is still a need today for a sharing solution that allows the second user to continue accessing the content. There is a further need for a simple solution that enables to keep track of which device has access to the content.

### SUMMARY OF THE PRESENT SYSTEM:

It is an object of the present system to overcome disadvantages and/or make improvements in the prior art.

The present system relates to a method method for sharing content between a first and second user equipment, the content being available to the second user equipment through a pairing with the first user equipment having access to the content, the method comprising for the second user equipment:
- accessing the content through the first user equipment for rendering on the second user equipment, the accessing comprising receiving from the first user equipment a link element to a source the content may be accessed from,
- rendering the content of the second user equipment as long as the first user equipment is detected to be in proximity with the second user equipment,
- upon detecting a loss of the proximity of the first user, using the link element to further access the content directly from the source.

Thanks to the present method, the loss of proximity will cause the second user equipment to use the received link element to further access the content. Thus a continuity of the service is ensured and the user of the second user equipment may carry on enjoying the content even when the first user equipment is no longer in proximity.

The present system also relates to an electronic device according to claim 13 and an application according to claim 14.

### BRIEF DESCRIPTION OF THE DRAWINGS:

The invention is explained in further detail, and by way of example, with reference to the accompanying drawings wherein:
FIG. 1 shows a user equipment or mobile device in accordance with an embodiment of the present system;
FIG. 2 shows an illustration of a first embodiment of the present system;
FIG. 3 shows an exemplary flowchart in accordance with another embodiment of the present system

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof, either direct or indirect (through a server for instance). An operative coupling may also include a wired and/or wireless coupling to enable communication between a content platform, such as a media content server serving a user equipment in accordance with an embodiment of the present system, and one or more user equipments. An operative coupling may also relate to an interaction between program portions and thereby may not describe a physical connection so much as an interaction based coupling.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a display device so that it may be seen and interacted with by a user. The term rendering may also comprise all the actions required to generate a GUI prior to the display, like e.g. a content list generated on a server side or one first user equipment side and rendered on a second user equipment in a browser application or a dedicated application program (AP).

The system, device(s), method, user interface, etc., described herein address problems in prior art systems. The system will be illustrated through different embodiment of a user equipment such as a mobile device or handset (smartphone, tablets ...) and comprising a touch interface. The man skilled in the art may easily apply the present teachings to any electronic device presenting such a touch sensitive panel, (referred also hereafter as a touch sensitive display or screen), a pointing device (like a mouse) or a keyboard.

In accordance with an embodiment of the present system, an electronic device provides a GUI for controlling an application program (AP) through user inputs, such e.g. as touch or mouse inputs.

A graphical user interface (GUI) may be provided in accordance with an embodiment of the present system:
- by an application program running locally on a device processor, such as part of a computer system of a mobile device, and/or,
- as provided by a network connected device or web based server, such as a media content server providing media content to the user device, the GUI being rendered on user device through a local application program AP connected to media content server.

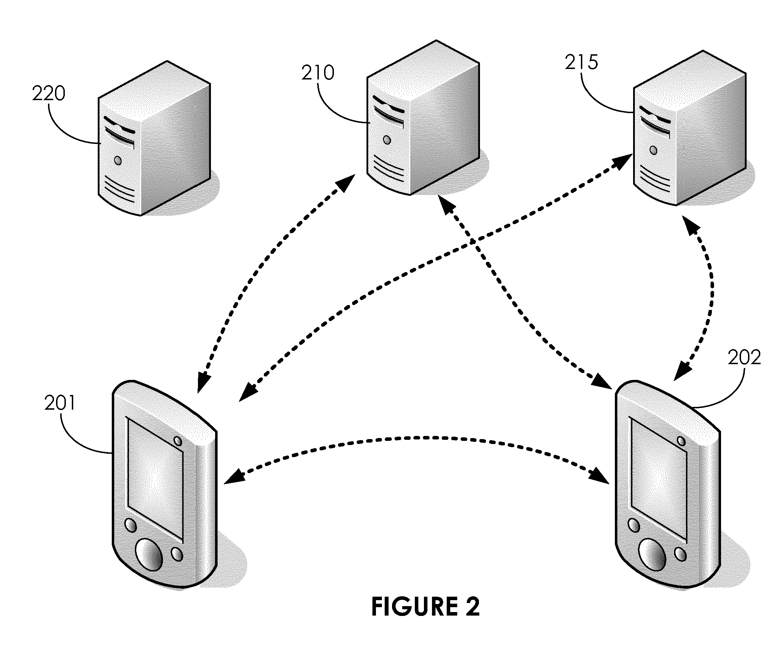

For instance, the present GUI enabling on a second user equipment 202 as seen in FIG. 2 the selection of a content available through a first user equipment 201 may be generated locally by a transfer or share application or rendered by a local AP connected to either a media or content server 210 or the first user equipment 201 providing the GUI elements. The provided visual environment may be displayed by the processor on a display device of the user device 202, e.g. a touch sensitive panel (touch panel in short), which a user may use to provide a number of touch inputs of different types.

A GUI is a type of user interface which allows a user to interact with electronic devices such as computers, hand-held devices such as smartphones ot tablets, household appliances, office equipment and the likes. GUIs are typically used to render visual and textual images which describe various visual metaphors of an operating system, an application, etc., and implemented on a processor/computer including rendering on a display device. Furthermore, GUIs can represent programs, files and operational functions with graphical images, objects, or vector representations. The graphical images can include windows, fields, dialog boxes, menus, icons, buttons, cursors, scroll bars, maps, etc. Such images can be arranged in predefined layouts, or can be created dynamically (by the device itself or by a web-based server) to serve the specific actions being taken by a user. In general, the user can select and/or activate various graphical images in order to initiate functions and tasks, i.e. controls, associated therewith. By way of example, a user can select a button that opens, closes, minimizes, or maximizes a window, a virtual representation or an icon that launches a particular application program. By way of another example, the GUI may present a typical user interface including a windowing environment and as such, may include menu items, pull-down menu items, icons, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system (OS).

In the description here after, an application program (AP) - or software - may be seen as any tool that functions and is operated by means of a computer, with the purpose of performing one or more functions or tasks for a user or another application program. To interact with and control an AP, a GUI of the AP may be displayed on the user device display.

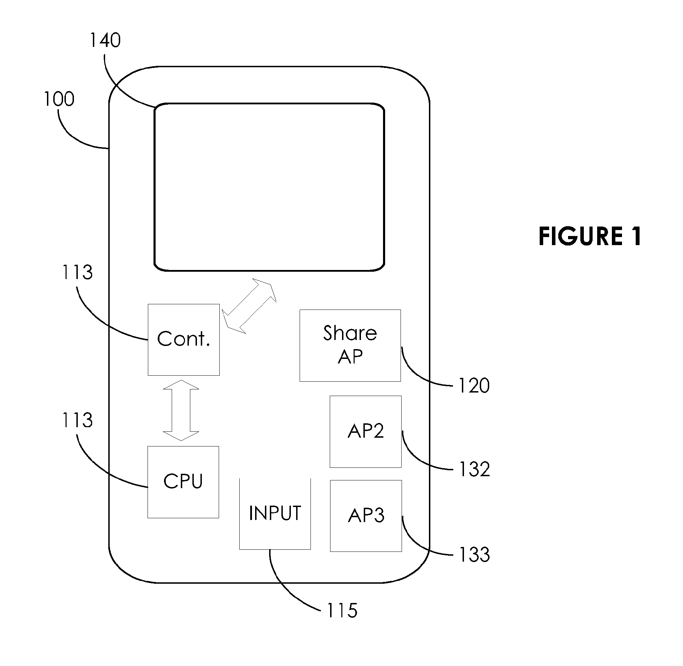

FIG. 1 is an illustration of an exemplary user equipment 100 used in the present system. In the here after description, the user or electronic device will illustrated as a mobile device 100 with a touch interface. This illustration is in no way limiting as the present teaching would work for any user devices such as laptops, pads, desktops and the likes, enabling the user to interact through a touch interface, a poiting device and/or a keyboard. The mobile device 100 comprises a display device 140, a processor 110, a controller 113 of the display device, and an input device 115.

In the present system, the user interaction with and manipulation of the application program rendered on a GUI is achieved using the display device 140, or screen, which is presently a touch panel operationally coupled to the processor 110 controlling the displayed interface.

Processor 110 may control the rendering and/or the display of the GUI on the display device 140 depending on the type of application program, i.e. resident or web-based. Processor 110 may also handle the user entries according to the present method. The user entries to interact with an application program may be provided through interactions with the touch panel 140.

The touch panel 140 can be seen as an input device allowing interactions with a finger of a user or other devices such as a stylus. Touch sensor interface or touch panel 140 may include any suitable circuitry to convert analog signals corresponding to touch input received over its surface into any suitable digital touch input data. Such touch input data can, for example, be used to make selections of portions of the GUI of an AP or displace windows as explained here after. The input received from a user's touch is sent to the processor 110. The touch panel 140 is configured to detect and report the (location of the) touches to the processor 110, which can interpret the touches in accordance with the application program and the currently displayed GUI. For example, the processor 110 can initiate a task, e.g. a control of the share AP accessing a content through the first user equipment, subsequent to a given touch input.

The controller 113, e.g. a dedicated processor, may be provided to process input touches locally and reduce demand for the main processor 110 of the mobile device. The touch panel 140 can be based on sensing technologies including but not limited to capacitive sensing, resistive sensing, surface acoustic wave sensing, pressure sensing, optical sensing, and/or the likes. Here after, for simplification purpose, reference will be made to a finger of the user touching panel 140, other devices such as a stylus may be used in place of the user finger.

In the present system, a number of different applications may be provided with the mobile device 100, like AP2 132 and AP3 133. A share or transfer application 120 may be further provided to enable the present method.

The transfer or share AP available on the second user equipment 202 is arranged to enable the following features:
- enable the pairing of the devices together. Alternatively the pairing may be performed without the share AP,
- detect that the first mobile device 201 is in proximity with the second mobile device 202. By proximity, as illustrated here after, one may understand a physical proximity as measured through a direct short range wireless connection (like NFC, WiFi direct or Bluetooth™). Alternatively the physical proximity may be measured through the devices respective location (reported by the devices themselves) or through their connection to the same hotspot or base station,
- browse content available on the first mobile device. To do so, the first mobile device may also run a similar share AP allowing the second mobile device to browse the content the first device either stores locally or has access to itself,
- select a content for rendering on the display device 140 of the second device 202,
- receive from the first mobile device 201 a link element to the source where the content may be accessed from,
- monitor the prixomity periodically or when needed to detect any loss of proximity, like a loss of pairing, one of the two mobile devices disconnecting from the common base station or hotspot, or moving away from each other beyond a certain distance,
- use the link element upon detection of the loss of proximity to further access the content. Indeed, as the content is access through the first mobile device that has the rights to access such content, a loss of proximity will be a trigger event to detect that the two devices are no longer in the right condition to share the content. The DRM associated to the content itself will prevent the second user equipment to further access and render the content. The link element allows the user to take the necessary steps to further access the content, like requesting authorization to the content server hosting the content. The authorization may include steps such as a payment or using a token for accessing the content.

FIG. 2 is an illustration of a first embodiment of the present system. A first mobile device 201 has access through a content server 210 (also referred here after as the content source, or source in short) and a license server 215 to content that can be rendered on a display device of said mobile device 201. The content may be media, like a video or a music file, or a social network page, like a Facebook™ page of a user. The content or distribution server 210 (that may be combined with the license server 215) will contains a plurality of content protected for distribution. The protected content will be streamed to or stored on the first mobile device 201.

The license server 215 will store content protection information and rights for using the content, i.e. when a player AP on the first or second mobile devices plays protected content, it will receive a license and rights from the license server 215 to enable the rendering.

The user of the firsts mobile device 201 may enjoy the rendering of the content through a premium subscription with either its radio network operator or telco giving the user access rights (provided by the license server 215) to some or a full catalog of content. Alternatively, the content may be provided by a third party like Apple™ offering content through its own store like the iTunes™. In both instances the first mobile device is running an application program AP1 for browsing, selecting and running the content. AP1 may be part of the share AP or coupled to the share AP of the present system.

A second mobile device 202 may be associated to a regular subscriber (or second user) of the telco, having no access to the (protected) content the first user of the mobile device 201 may enjoy. The second mobile device may download the share AP of the present system (from the content server for instance or a separate server 220, referred to as the proximity server here after) to allow the rendering of the content the first mobile device has access to.

In the present system, in order to share the content, the licenses and DRM hosted by the license server 215 may allow a multi-screen and at least a temporary multi-user scenario. By temporary multi-user scenario, one may understand that the second mobile device 202 is allowed to access the content as long as it accesses it through the first device, either directly if the content is stored on the first device, or indirectly if it is streamed through the first device and from the content source 210. Alternatively, the second mobile device 202 may access the content directly from the content server 210.

Another server 220 may be available in the present system to handle the proximity measurement. Indeed, the proximity server 220 may be arranged to receive reports from the first and second mobile devices as to either their localization, the base stations or WiFi hotsport they are connected to ... Alternatively the proximity server may be provided with the hotspot. As mentioned before, the proximity server 220 may also provide the present sharing AP to the mobile devices 201 and 202. As another alternative, the proximity measurement can be done by the AP.

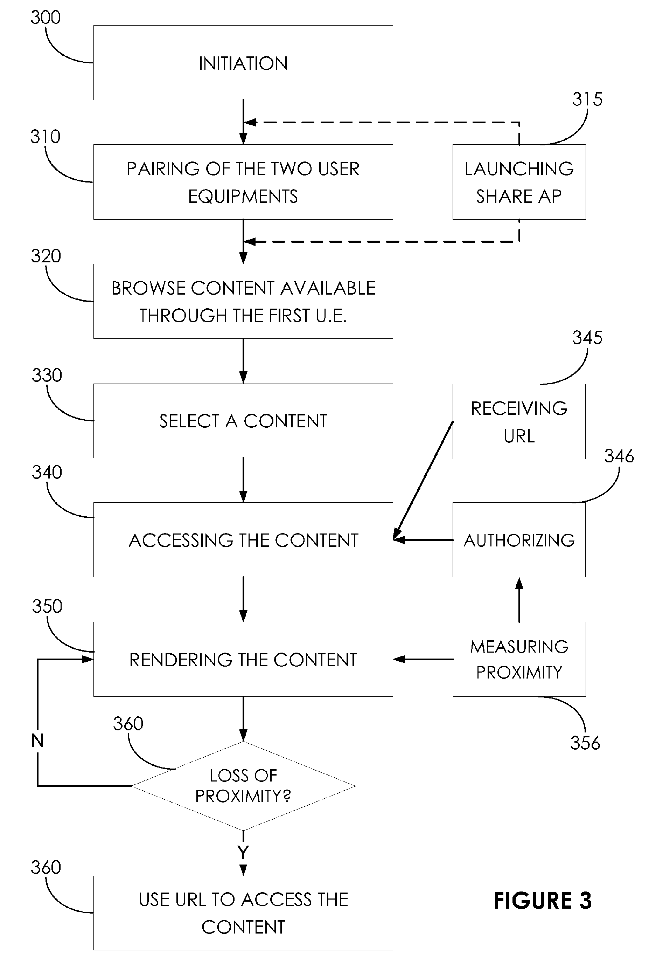

Other functionalities of the share application will be described here after in relation to the other FIG. 3. The illustration of a swoop application is in no way limiting as the listed functionalities may be provided to an existing media player or a webbrowser through plugins, instead of a dedicated application.

FIG. 3 is a flowchart illustrating another embodiment of the present method. In an initiation act 300, the mobile devices 201 and 202 may download at any time the transfer or share AP of the present system, for instance from an application store or the proximity server 220. The present method will be illustrated with the share AP. This is in no way limiting as the functionalities associated to the share AP may be available at the Operating System (OS) level for one or both user equipments. The present method will be described through the second mobile device 202 and its processor implementing its different acts.

In a subsequent act 310, the devices are paired. The pairing will allow the second device to browse through the content available on the first mobile device 201 and access a selected content for a subsequent rendering on the display device of the second mobile device 202. The pairing may be done with various technologies existing today:
- indirect, i.e. over a data connection, such as e.g. through the sharing AP itself (using technologies similar to BUMP™ that is based on the location that is reporting over the data connection to a central server like the proximity server 220),
- direct, ie locally through a shortrange wireless technology such as WiFi direct, 3G/LTE direct, NFC, bluetooth™, soundwaves, light based ...

Today a series of pairing technologies are available, for instance the the pairing may be triggered through a user gesture like a sliding touch input across the device screens when placed next to each other. Pairing techniques mentioned herein are readily available to the man skilled in the art and are beyond the scope of the present system.

The share AP may be triggered in an optional act 315 (hence the dotted lines in FIG. 3) either before the pairing (if the pairing is performed through the share AP) or after the pairing (if the share AP relies upon the established pairing).

In a further act 320, the user of the second mobile device 202 will be able to browse the content through a share AP GUI representing the content accessible to first mobile device, for instance through the its user Premium subscription. In a further act 330, the user of the second mobile device 202 will select a content to render on the second mobile device 202, for instance on its dislpay device and/or through its speakers, or speakers operatively connected to the second mobile device. Alternatively the content may be pushed by the first user using himself the share AP on the first mobile device 201 and sharing a selected content with the second mobile device 202.

In a further act 340, the processor of the second mobile device 202 will access the (selected content through the first user equipment for rendering on the second user equipment, e.g. on a display screen. The accessing may be direct if the content is stored on the first mobile device, or indirect if the content is streamed from the content server 210 through the frist mobile device 201or streamed directly from the content server 210.

In the present system, the content accessible to the first mobile device is associated to a link element to a source (media or content server 210 in FIG. 2) the content may be accessed from.

Through the accessing act 340, the content will be rendered on the second mobile device so that its user can enjoy the same content available to the first premium user. The accessing of a content will comprise in the present system a further act 345 of receiving from the first user equipment the link element to a source for the content. The link element will be used as described later on for reaccessing the content from the second user equipment 202.

Provided DRM is used for the content, the accessing will also comprise a further act 346 for verifying that the second user equipment is authorized with the source to access the content. The verifying may be performed through the license server 215. Alternatively the verifying may be performed using the proximity of the two devices, i.e. measuring the physical proximity of the two devices as described in relation to act 356 described here after, and providing that the DRM right allows sharing content to devices in proximity. Provided the measurement of proximity in act 356 confirms that the two mobile devices are in proximity with each other, the content may be authorized for rendering on the second mobile device 202. This may consists for instance in sending from the second mobile device 202 a second user equipment identifier along the content information to the proximity server 220. Having received the same identifier from the second mobile device, the first mobile device will report to the proximity server 220 a request to share a content. The proximity server having received matching request from both devices, will inform the content server 210 and the license server 215 to authorize the content on the second mobile device.

More specifically, the authorizing act 346 may be performed through an authorization token received from the content server 210. Indeed the second user equipment 202 will send an authorization request to the content source to access the content using for instance the received URL of act 345. The content server will subsequently return a confirmation token enabling the second user equipment to access the content. The confirmation token may be a function of the authorization request, and data received by the source from the first user equipment. For instance, the authorization request may comprise the second device identifier. The content serve will have received as well the same second user equipment identifier from the first user equipment. The matching of the two identifiers will enable the content server to produce the authorization token.

While the content is rendered in a further act 350, the processor of the second device 202 will periodically monitor the devices proximity in a further act 356. The monitoring may be performed from the first device, or both devices could monitor their proximity. Alternatively the proximity may be measured whenever a change is detected with either device. For instance the first mobile device, detecting a change in location (attaching to a new cell, different WiFi hotspot or simply moving physically) may report the change to either the proximity server 220 or the second mobile device itself. Alternatively the second mobile device, detecting itself a change in its own locatin may request from the first mobile device its current location for getting an up to date value of the proximity. By proximity, one may understand physical proximity of the two user equipments as measured either by:
- the devices location. The second mobile device 202 may receive or request a message comprising a first parameter representative of the location of the first mobile device 201, and may determine the proximity based on a comparison of the received first parameter to a second parameter representative of the location of the second user equipment. The message may be received via different communication means such as e.g. via the share AP (channeled through for instance the proximity server 220), or from the first mobile device 201 if the devices are paired or known to each other. The parameter may be for instance the mobile device current location as measured by a GPS sensor for instance. The proximity detection will then be satisfied if the locations are closer than a preset distance. Alternatively the parameter may be a network element identifier the user equipment is attached or connected to , such as a base station or a cell ID (LTE/3G) or a WiFi hotspot,
- the pairing itself when direct, i.e. done through a short range wireless connection like a Bluetooth™, WiFi direct, 3G/LTE direct or NFC. When a pairing is direct, it relies upon short range wireless technologies. As the pairing is only functional within the range of the wireless technogies (a few inches for an NFC, a few meters for a WiFi direct), the pairing is an indication of the physical proximity of the two mobile devices, and any loss of pairing may be caused by the two devices moving away from each other.

In a further act 360, the processor of the second mobile device 202 will monitor for any loss of proximity. The loss of proximity is directly measured according to the chosen type of proximity:
- provided the proximity is based on a parameter representative of the user equipment location, the loss of proximity will happen if the distance between the devices based on their respective location (as measured by the device itself) becomes greater than a preset distance. Alternatively, if the parameter is an identifier for a network element, the loss of proximity will be happen if the devices are no longer connected to the same network elements,
- provided the proximity is based on the direct pairing through a short range wireless connection, the loss of proximity will coincide with the loss of direct pairing.

Provided a loss of proximity of the first user is not detected (answser No to act 360), the rendering of the content will carry on in act 350. Provided a loss is detected (answer Yes to act 360), the processor of the second user equipment 202 will use the link element (received in act 345) to further access the content directly from the source. The use of the URL may cause the share AP to prompt the user of the second mobile device for inputs concerning his desire to continue accessing the content. The prompt may be generated through accessing the URL corresponding to the content server 210. A transaction may be needed at this stage to further access the content. The transaction will allow the second mobile device to get another license to carry on accessing the content. The access through the first mobile device is no longer needed.

The DRM or license to the content in the present system may be linked to the proximity so that the rights to render the content on the second user equipment will be automatically suspended when a loss of proximity is detected. This may be done through the share AP informing the license server 215 or through a DRM associated to the proximity as measured by the second user equipment 202.

Furthermore in the present system, the license to the content may be seen as a temporal and/or spatial license, i.e.:
- a spatial license that is a right to access a protected content on the first user equipment only that first user equipment is in proximity to the second user equipment,
- a temporal license that is a temporal (limited in time) access to the content either managed by the first user equipment or by the license server 215 itself.

As mentioned before, the license may also comprise a right to a minimal two active screens (for videos), right to listening protected content on minimal two devices (music), right to access protected content from minimal two devices (general),

In the present system, the content was illustrated as being as media or audio content. Alternatively, the content may be a temporary address to a social network server hosting an image of the first user social network page. Thus the first user may allow the second user equipment to access his social network page. The loss of proximity will allow the second user equipment to still access the social network page. In a further embodiment of the present system, the share AP may provide the first mobile device with a control over which device may access the social network page and later on disable the access to the second user equipment 202.

### Use cases:

Let us assume a protected content is locally stored on first user equipment 201 or device A. When the second user equipment 202 or device B comes in proximity to the first user equipment, and if offered a protected content from the first user equipment, the second user equipment will receive a temporal (or not) license that allows accessing protected content shared by the device 201.

The first mobile device will share protected content or URL to the content to device B over a direct (e.g. Wi-Fi direct) or indirect (e.g. Wi-Fi AP, mobile network) channel. The protected content is progressively downloaded to device B. When the devices A and B are no longer in proximity (loss of proximity detected), the user of the device B will receive a prompt asking for purchasing the protected content (or subscription). Device B is then granted access to the protected content after the purchase. The content may be then copied from device A to device B (e.g. over mobile network), or alternatively device B may use the provided URL for accessing the protected content.

In another use case, the protected content is streamed from a server to device A. When device B is in proximity to device A, and when offered protected content by device A to device B, device B received a license (temporal or not) that allows accessing protected content shared by device A. Device A then streams protected content or provides URL to the content to device B over a direct (e.g. Wi-Fi direct, Bluetooth) or indirect (e.g. Wi-Fi AP, network) channel.

Protected content is then streamed to device B either through device A or directly from a content server. When both devices A and B are no longer in proximity, device B receives a prompt asking for purchasing the protected content (or subscription). Device B is then granted access to the protected content after the purchase. Device B uses provided URL for accessing the protected content on a content server.

Finally, the above discussion is intended to be merely illustrative of the present system and should not be construed as limiting the appended claims to any particular embodiment or group of embodiments. Thus, while the present system has been described with reference to exemplary embodiments, including user interfaces, it should also be appreciated that numerous modifications and alternative embodiments may be devised by those having ordinary skill in the art without departing from the broader and intended spirit and scope of the present system as set forth in the claims that follow.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method for sharing content between a first and second user equipment, the content being available to the second user equipment through a pairing with the first user equipment having access to the content, the method comprising for the second user equipment:
- accessing the content through the first user equipment for rendering on the second user equipment, the accessing comprising receiving from the first user equipment a link element to a source the content may be accessed from,
- rendering the content of the second user equipment as long as the first user equipment is detected to be in proximity with the second user equipment,
- upon detecting a loss of the proximity of the first user, using the link element to further access the content directly from the source.

2. A method according to claim 1, wherein the detecting of the proximity comprises:
- detecting that the first user equipment is paired with the second user equipment using a short range wireless connection.

3. A method accordin to the previous claim 1, wherein the detecting of the proximity comprises:
- receiving a message comprising a first parameter representative of the location of the first user equipment,
- comparing the first parameter to a second parameter representative of the location of the second user equipment.

4. A method according to the previous claim 3, wherein the parameter presentative of the user equipment location is the locations as measured by said user equipment.

5. A method according to the previous claim 3, wherein the parameter presentative of the user equipment location is an identifier for a network element the user equipment the locations as measured by said user equipment is connected to.

6. A method according to one of the previous claims, wherein the pairing of the first and second user equipments further comprises:
- sending an identifier for the second user equipment to the first user equipment.

7. A method according to one of the previous claims, wherein the accessing further cormprises:
- verifying that the second user equipment is authorized with the source to access the content.

8. A method according to the previous claim 6, wherein the verifying comprises:
- sending a request to the source for accessing the content,
- receiving a confirmation token from the source enabling the second user equipment to access the content, the confirmation token being a function of the request, and data received by the source from the first user equipment.

9. A method according to the previous claim 7, wherein the request to the source comprises an identifier of the second user equipment.

10. A method according to the previous claim 7, wherein the request to the source comprises the location of the second user equipment.

11. A method according to one of the previous claims, wherein the content is a media content.

12. A method according to one of the preceeding claims 1 to 9, wherein the content is a URL.

13. A electronic device for sharing content between a first and second user equipment, the content being available to the second user equipment through a pairing with the first user equipment having access to the content, the electronic device being arranged to:
- access the content through the first user equipment for rendering on the second user equipment, the accessing comprising receiving from the first user equipment a link element to a source the content may be accessed from,
- render the content of the second user equipment as long as the first user equipment is detected to be in proximity with the second user equipment,
- upon detection a loss of the proximity of the first user, use the link element to further access the content directly from the source.

14. An application embodied on a computer readable medium and arranged to share sharing content between a first and second user equipment, the content being available to the second user equipment through a pairing with the first user equipment having access to the content, the application being carried out by a processor of the second user equipment and comprising instructions to implement a method according to one of the claims 1 to 12.
